# EUROPÄISCHE PATENTSCHRIFT

(11) **EP 1 602 897 B1**
(45) Veröffentlichungstag und Bekanntmachung des Hinweises auf die Patenterteilung: **06.06.2007**
(21) Anmeldenummer: 05102689.6
(22) Anmeldetag: 06.04.2005
(51) Int. Cl.: G01C 21/26

(54) **Verwendung eines mobilen Rechners zur Bedienung eines Fahrerinformationssystems**
Use of a mobile computer to control a driver information system
Utilisation d'un ordinateur portable pour commander un système d'information du conducteur

(30) Priorität: 05.06.2004 DE 102004027642
(43) Veröffentlichungstag der Anmeldung: 07.12.2005
(73) Patentinhaber: ROBERT BOSCH GMBH, 70442 Stuttgart (DE)
(72) Erfinder: Lauke, Volker, 31249, Hohenhameln (DE); Pitz, Gerhard, 31139, Hildesheim (DE)

(56) Entgegenhaltungen:
- WO-A-01/71691
- DE-A1- 10 057 800
- PATENT ABSTRACTS OF JAPAN Bd. 2003, Nr. 12, 5. Dezember 2003 (2003-12-05) & JP 2003 294480 A (HCX:KK), 15. Oktober 2003 (2003-10-15)

## Beschreibung

### Stand der Technik

Die Erfindung geht von fernbedienbaren Fahrerinformationssystemen für Kraftfahrzeuge aus.

Solche fernbedienbaren Fahrerinformationssysteme sind beispielsweise in Form von Autoradiogeräten bekannt, die neben der herkömmlichen an einer Frontkappe des Geräts angeordneten Bedienoberfläche häufig auch über Funkfernbedienungs-Sender, vergleichbar denen für Heim-Fernseh-Empfänger oder andere Geräte der Unterhaltungselektronik, verfügen. Weiter sind beispielsweise aus DE 196 48 910 A1 Autoradiogeräte bekannt, die über eine zum Zwecke des Diebstahlschutzes abnehmbare, die Bedienelemente des Autoradiogeräts umfassende Frontkappe verfügen, wobei die abgenommene Frontkappe im vom Gerät gelösten Zustand auch zur Fernbedienung des Autoradios genutzt werden kann.

Ferner sind auch Fahrzeugnavigationssystem zur Installation und zum Betrieb in Kraftfahrzeugen, die häufig über eine vom Gerät abgesetzte und mit diesem beispielsweise über Kabel verbundene Bedieneinheit verfügen.

Darüber hinaus sind Fahrzeugnavigationssysteme bekannt geworden, die eine Anzeige eines externen mobilen Rechners zur Darstellung einer Straßenkarte nutzen, auf der eine Fahrroute eingezeichnet ist. Die Anzeigedaten werden dabei über eine Kommunikationsverbindung vom Fahrzeugnavigationssystem an den mobilen Rechner, beispielsweise ein PDA (Personal Digital Assistent) übertragen.

DE 100 57 800 A1 offenbart ein Verfahren zur Eingabe von Daten in ein Fahrzeugnavigationssystem, welches sich dadurch auszeichnet, dass die Daten nach Maßgabe einer Eingabe über eine Benutzerschnittstelle einer für einen mobilen Einsatz vorgesehenen Datenbank aus deren Speicher ausgewählt und über eine Luftschnittstelle an das Fahrzeugnavigationssystem übertragen werden. Bei den übertragenen Daten handelt es sich insbesondere um Adressinformationen, die im Navigationssystem als Zielortdaten für eine nachfolgende Routenberechnung verwendet werden können.

US 2002/0158771 A1 offenbart einen anlernbaren Fernbedienungssender, der Funk- bzw. Infrarot-Steuersignale von einem gerätespezifischen Fernbedienungssender empfangen und seinen Bedienelemente zugeordnet abspeichern kann, so dass der angelernte Fernbedienungssender anstelle des gerätespezifischen Fernbedienungssenders darauf zur Bedienung des Geräts verwendet werden kann. Ausgehend von diesem Stand der Technik schlägt US 2002/0158771 A1 vor, das fern zu bedienende Gerät mit einer eigenen Anlerneinheit auszustatten, so dass ein anzulernender Fernbedienungssender die Fernbedienungssignale direkt von dem zu bedienenden Gerät empfangen und speichern kann.

WO-A-01 71691 offenbart die Verwendung eines mobilen Rechners zur Bedienung eines in einem Fahrzeug installierten Fahrerinformationssystems. Über eine Kommunikationsverbindung werden dabei zunächst Informationen, die eine Bedienoberfläche beschreiben, vom Fahrerinformationssystem an den mobilen Rechner übertragen, mit Hilfe derer der mobile Rechner die Bedienoberfläche darstellt. Danach setzt der mobile Rechner Benutzereingaben an der dargestellten Bedienoberfläche in Bediensignale um und sendet diese über die Kommunikationsverbindung an das Fahrerinformationssystem.

### Vorteile der Erfindung

Die Erfindung mit den Merkmalen des unabhängigen Patentanspruchs hat dem gegenüber den Vorteil, dass ein ohnehin vorhandener mobiler Rechner, also beispielsweise ein Klein-Rechner wie z.B. ein PDA oder auch ein Mobil-Telefon, als Fernbedienungssender für ein Fahrerinformationssystem angelernt und verwendet werden können. Damit entfällt die Notwendigkeit für einen separaten Geräte-Fernbedienungssender für ein fernbedienbares Fahrerinformationssystem.

Das zusätzliche Gerät (PDA, Handy, o.a.) kann als zusätzliche Anzeigeeinheit dienen um bei ungünstigen Einbaulagen des Fahrerinformationssystems dem Fahrer eine bessere optische Anzeige (Blickwinkel) zu erlauben. Damit trägt es ebenfalls zur Fahr- und Bediensicherheit bei.

### Zeichnungen

Ausführungsbeispiele der Erfindung sind in den Figuren dargestellt und werden nachfolgend näher erläutert.

### Es zeigen

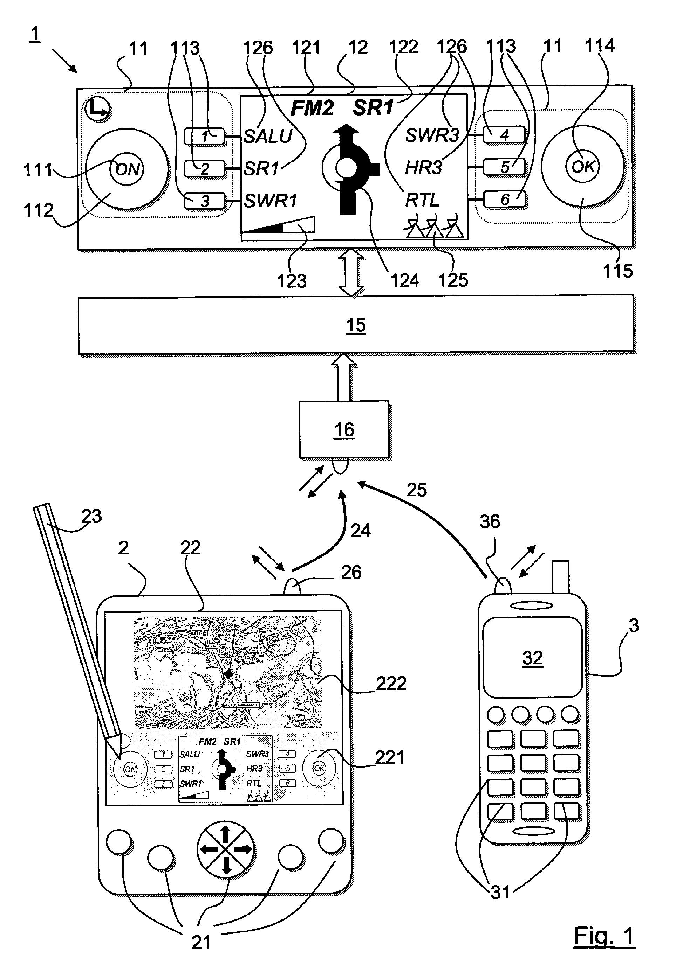

Figur 1 ein fernbedienbares Fahrerinformationssystem sowie zwei mobile Rechner, die als Fernbedienungssender zur Fernbedienung des Fahrerinformationssystems verwendet werden.

### Beschreibung der Ausführungsbeispiele

In Figur 1 bezeichnet das Bezugszeichen 1 das fernbedienbare Fahrerinformationssystem. Bei diesem kann es sich beispielsweise um ein Fahrzeugnavigationssystem handeln, das nach Eingabe eines Zielorts aufgrund in digitaler Form vorliegender Kartendaten eine Fahrroute von einem momentanen Fahrzeugstandort zu dem eingegebenen Zielort berechnet. Beispielsweise kann es sich dabei auch um ein Autoradiogerät handeln, das empfangene Rundfunksignale dekodiert bzw. demoduliert und die darin enthaltenen akustischen Signale über angeschlossene Lautsprecher wiedergibt. Im vorliegenden Fall sei das Fahrerinformationssystem beispielhaft ein kombiniertes Fahrzeugnavigations- und Autoradiogerät, das zum Einbau in einen DIN-Schacht in einer Mittelkonsole oder im Armaturenbrettbereich eines Kraftfahrzeugs vorgesehen ist.

Das Fahrerinformationssystem 1 verfügt über eine Bedienoberfläche bzw. Benutzerschnittstelle. Diese umfasst Bedienelemente 11, wie beispielsweise einen Geräte-Hauptschalter 111, einen Lautstärke-Einstellknopf 112, Stationstasten 113, durch deren Betätigung in zugeordneten Speichern abgelegte Rundfunkfrequenzen oder Rundfunkprogramme einstellbar sind, sowie eine Bestätigungstaste 114 zur Auswahl eines mit einem Scroll-Rad 115 in einem Menu oder einer Liste angewählten Menupunktes. Die Benutzerschnittstelle umfasst weiter Anzeigeelemente 12, im vorliegenden Fall in Form eines zentralen Geräte-Displays, auf dem aktuelle Betriebsparameter des Geräts, wie etwa der Name 122 eines aktuell empfangenen Rundfunkprogramms, der zugehörige Programmspeicher des Geräts 121, eine eingestellte Wiedergabelautstärke 123, ein aktueller Empfangsstatus von GPS-Satellitensignalen 125 und Fahrhinweise zur Zielführung entlang einer berechneten Fahrroute in Form eines Richtungspfeils 124 sowie einstellbare oder auswählbare Betriebsparameter und Funktionen, wie etwa Namen alternativ empfangbarer Rundfunkprogramme 126, alphanumerisch und/oder symbolisch dargestellt oder darstellbar sind.

Die Bedienoberfläche umfasst weiterhin ein Betriebsprogramm, welches die Informationen zur Ansteuerung des Displays, zur Abfrage des Zustandes der Bedienelemente und zur Zuordnung von Steuersignalen zu Bedienelement-Zuständen umfasst. Dieses Betriebsprogramm ist in einer Steuerung 15 des Fahrerinformationssystems implementiert, die das Betriebsprogramm abarbeitet und dementsprechend die Zustände der Bedienelemente abfragt und zugehörige Steuersignale erzeugt sowie die Display-Anzeige steuert. Weiterhin steuert die Steuerung 15 sämtliche für die Funktion des Geräts 1 wesentlichen Betriebsabläufe.

Das Fahrerinformationssystem 1 umfasst weiterhin eine Kommunikationsschnittstelle 16, die mit der Steuerung 15 verbunden ist. Die Kommunikationsschnittstelle ist vorzugsweise als drahtlose Schnittstelle, hier als Infrarot- oder Bluetooth-Schnittstelle, ausgestaltet und dient dem Austausch von Informationen mit bezüglich des Fahrerinformationssystems 1 externen Geräten 2, 3.

Bei dem externen Gerät 2, welches zur Fernbedienung des Fahrerinformationssystems 1 verwendet werden soll, handelt es sich beispielsweise um ein sogenanntes PDA (Personal Digital Assistent) oder einen sogenannten Palmtop-Computer. Dieser mobile Rechner 2 verfügt über eine zweite Bedienoberfläche, umfassend zweite Bedienelemente 21 wie Drucktasten und ein Cursor-Steuerfeld, ein zweites Display 22 zur Anzeige von Informationen, sowie ein zugehöriges zweites Betriebsprogramm zur Abfrage der Zustände der Bedienelemente und entsprechenden Zuordnung von Steuersignalen sowie zur Steuerung der Anzeige auf dem Display 22. Das zweite Betriebsprogramm, also das Betriebsprogramm des externen Geräts 2 ist in einem in der Figur nicht dargestellten Programmspeicher des externen Geräts abgelegt und wird durch einen Prozessor des externen Geräts 2 abgearbeitet. Das Betriebsprogramm des externen Geräts 2 ist vorzugsweise als auf einem vereinheitlichten Betriebssystem, wie zum Beispiel JAVA, aufsetzende Software-Applikation ausgeführt.

Das Display 22 des externen Geräts 2 kann vorzugsweise auch als sogenanntes Touch-Screen, also als berührungsempfindliches Display 221 ausgebildet sein, mittels dessen durch Anwählen eines bestimmten Bereiches, vorzugsweise mit einem dazu vorgesehenen Eingabestift 23, dem angewählten Display-Bereich zugeordnete Funktionen auslösbar sind. Das Touch-Screen stellt somit eine alternative bzw. ergänzende Bedieneinheit dar.

Das externe Gerät verfügt über eine zweite Kommunikationsschnittstelle 26, die im vorliegenden Fall ebenso wie die des Fahrerinformationssystems vorzugsweise als drahtlose Schnittstelle, hier als Infrarot- oder Bluetooth-Schnittstelle, ausgestaltet ist und dem Austausch im Programm- oder einem Datenspeicher des Geräts abgelegten oder abzulegenden Informationen mit einem bezüglich des externen Geräts 2 wiederum externen Geräts dient. Zur Durchführung der Erfindung ist wesentlich, dass die zweite Kommunikationsschnittstelle 26 mit der des Fahrerinformationssystems 1 kompatibel ist, so dass zwischen beiden Geräten 1, 2 ein Informationsaustausch erfolgen kann. Neben der Hardware-Kompatibilität muss hierzu auch eine Kompatibilität der Datenübertragungsprotokolle vorhanden oder an einem der Geräte 1 oder 2 herstellbar sein.

Bevor das externe Gerät 2, hier also das PDA bzw. der Palmtop-Computer zur Bedienung des Fahrerinformationssystems 1 genutzt werden können, muss dieses bzw. dieser zunächst als Fernbedienungssender für das Fahrerinformationssystem 1 konfiguriert werden.

Hierzu wird bei beiden Geräten 1 und 2, vorzugsweise durch eine entsprechende Bedienereingabe über die jeweiligen Bedienelemente 11 bzw. 21 des Fahrerinformationssystems 1 und des mobilen Rechners 2, ein Anlernmodus eingeleitet.

In der Folge stellen Fahrerinformationssystem 1 und mobiler Rechner 2 über ihre jeweilige Kommunikationsschnittstelle 16 und 26 in an sich bekannter Weise eine Kommunikationsverbindung her. Sobald die Kommunikationsverbindung zwischen Fahrerinformationssystem 1 und mobilem Rechner 2 hergestellt ist, liest die Steuerung 15 des Fahrerinformationssystems 1 aus ihrem in der Figur nicht separat dargestellten Programmspeicher die für die Realisierung seiner Bedienoberfläche bzw.

Benutzerschnittstelle relevanten Programmdaten aus und sendet diese über die bestehende Kommunikationsverbindung über die Kommunikationsschnittstellen 16 des Fahrerinformationssystems 1 und 26 des mobilen Rechners 2 an den mobilen Rechner 2. Die Steuerung des mobilen Rechners 2 legt die empfangenen Daten in einem beschreibbaren Programmspeicher des mobilen Rechner 2 ab.

Schon während der Datenübertragung oder alternativ nach der vollständigen Übertragung der Programmdaten vom Fahrerinformationssystem 1 zum mobilen Rechner 2 wird der mobile Rechner 2 auf Grundlage der übertragenen Programmdaten konfiguriert. Dies bedeutet, dass die übertragenen Programmdaten zur Anpassung der Bedienoberfläche des mobilen Rechners 2 genutzt werden, so dass der mobile Rechner 2 nach vollendeter Konfigurierung, wie in Figur 1 angedeutet, eine an die Bedienoberfläche des Fahrerinformationssystems 1 angepasste Bedienoberfläche bereitstellt.

Vorzugsweise sind dabei entweder das Betriebsprogramm des mobilen Rechners 2 und/oder die an den mobilen Rechner 2 übertragenen, die Bedienoberfläche des Fahrerinformationssystems 1 beschreibenden Informationen so ausgebildet, dass sie eine Umschaltung des mobilen Rechners 2 zwischen der Fernbedienungsfunktion für das Fahrerinformationssystem 1 und einem weiteren Betriebsmodus, etwa einer Termin- und/oder Adressdatenbank, erlauben. Somit kann der mobile Rechner 2 weiterhin für seine angestammten Aufgabe eingesetzt werden, ohne dass für eine anschließende Nutzung als Fernbedienungssender für das Fahrerinformationssystem 1 die dazu erforderliche Bediensoftware neu geladen werden muss.

Nach Abschluss des Anlernmodus kann der mobile Rechner 2 in an sich bekannter Weise als Fernbedienungssender für das Fahrerinformationssystem 1 genutzt werden. Im Falle des PDA ist hier von besonderem Vorteil, dass dieses ein Touch-Screen 221 als alternatives Eingabemittel zur Verfügung stellt. In Verbindung mit einem hochauflösenden grafischen Display 22 lässt sich so die Bedienoberfläche des Fahrerinformationssystems 1 in annähernd identischer optischer Anmutung darstellen, die Bedienfunktionen können beispielsweise mittels des Bedienstiftes 23 in selbsterklärender Weise und analog zur Bedienung direkt am Fahrerinformationssystem 1 nun über das Display 22 des mobilen Rechners vorgenommen werden. Bei Anwahl eines Bereiches des Touch-Screens 221 des PDA 2, etwa des simulierten Lautstärkeknopfes 112 auf dem Touch-Screen 221 mittels des Bedienstiftes 23 und Verschieben des Stiftes innerhalb des Kontur des dargestellten Lautstärkeknopfes im oder entgegen Uhrzeigersinn erzeugt das PDA 2 nach Maßgabe der Betriebssoftware ein Fernsteuersignal 24, das über die Kommunikationsschnittstelle 26 des PDA ausgegeben wird. Dieses Fernsteuersignal 24 wird von der Kommunikationsschnittstelle 16 des Fahrerinformationssystems aufgenommen und in ein Steuersignal zur Erhöhung bzw. Verminderung der Wiedergabelautstärke des Fahrerinformationssystems 1 umgesetzt. Infolge dieses Steuersignals wird die Wiedergabelautstärke im Fahrerinformationssystem entsprechend der Bewegung des Bedienstiftes 23 auf dem Touch-Screen des PDA 2 verstellt, gleichzeitig wird auch die Lautstärkeanzeige 123 auf dem Display 12 des Fahrerinformationssystems 1 verändert. Das Fahrerinformationssystem 1 sendet im Gegenzug über seine Kommunikationsschnittstelle 16 ein Signal, welches die aktuell eingestellte Lautstärke repräsentiert. Dieses wird von der zweiten Kommunikationsschnittstelle 26 des PDA 2 aufgenommen und durch dessen Betriebsprogramm in eine entsprechend angepasste Anzeige auf dem zweiten Display 22 des PDA umgesetzt.

Neben den bisher beschriebenen reinen Fernbedienungsfunktionen kann der mobile Rechner 2 zusätzlich als erweiterte Anzeigeeinheit für das Fahrerinformationssystem verwendet werden. Dies ist insbesondere bei Fahrerinformationssystemen von Bedeutung, die aufgrund vorgegebener beschränkter Abmessungen, etwa aufgrund ihrer Bestimmung zum Einbau in einem genormten sogenannten 1-DIN-Radio-Schacht eines Fahrzeugs, über eine kleines Display 12 verfügen. Wie in Figur 1 dargestellt, kann hier beispielsweise zusätzlich zu den Fahrrichtungspfeilen auf dem zweiten Display 22 des mobilen Rechners 2 zusätzlich eine Kartendarstellung 222 angezeigt werden mit darin vermerkter Position des Fahrzeugs, welche eine Orientierung erleichtert.

In Abweichung vom bisher beschriebenen Ausführungsbeispiel kann der mobile Rechner auch beispielsweise ein Mobiltelefon 3 oder ein anderes elektronisches Gerät sein, welches einen Programmspeicher und einen Rechner aufweist. Wesentlich sind hierfür eine zur Kommunikationsschnittstelle 16 des Fahrerinformationssystem 1 kompatible weitere Kommunikationsschnittstelle 36 sowie ein kompatibles Betriebssystem. Bei derzeit erhältlichen mobilen Geräten 2, 3 hat sich hier JAVA als gemeinsames Betriebssystem etabliert. Wesentlich sind weiter eine dritte Benutzerschnittstelle umfassend dritte Bedienelemente 31 und vorzugsweise auch ein drittes Display 32 des weiteren mobilen Rechners 3.

In Abweichung von der bisherigen Beschreibung müssen die die Bedienoberfläche des Fahrerinformationssystems 1 beschreibenden Informationen, welche an den mobilen Rechner 2, 3 übertragen werden, nicht notwendig alle Informationen über die Bedienoberfläche des Fahrerinformationssystems 1 enthalten. Insbesondere ist es nicht erforderlich, dass die auf dem mobilen Rechner 2 oder 3 auf Grundlage der übertragenen Bedienoberflächen-Informationen simulierte Bedienoberfläche in ihrer optischen Anmutung vollständig der des Fahrerinformationssystems 1 entspricht. Vielmehr kann es auch genügen, nur solche Informationen zu übertragen, die eine jeweilige Grundfunktion eines jeden Bedienelements 11 des Fahrerinformationssystems 1 beschreiben, wobei das mobile Gerät 2 oder 3 auf Basis dieser Information dann eine geeignete Darstellung und eine geeignete Zuordnung zu einem realen Bedienelement des mobilen Rechner 2, 3 herstellt. Beispielsweise genügt es, wenn die den Lautstärkeregler 112 des Fahrerinformationssystems 1 beschreibenden Informationen eine Information darüber enthalten, dass eine Vergrößern/Verkleinern-Funktion benötigt wird und dass diese eine Veränderung der Wiedergabelautstärke bewirken soll. Die Umsetzung dieser Information kann dann im mobilen Rechner 2, 3 gerätespezifisch erfolgen. Beispielsweise kann auf dem beschränkten Display 32 eines Mobiltelefons 3 hierfür ein Schiebschalter simuliert werden, dessen Stellung mittels zweier Cursor-Tasten 31 des Mobiltelefons 3 vergrößert oder verkleinert wird. Die durch diese Bedienung erzeugten Steuer- bzw. Fernbedienungssignale 25 entsprechen inhaltlich denen durch das PDA 2 erzeugten Signalen 24, werden über die dritte Kommunikationsschnittstelle 36 des Mobiltelefons ausgegeben und wie oben beschrieben im Fahrerinformationssystem 1 entsprechend umgesetzt. Die Rückmeldung des Fahrerinformationssystems 1 an den Fernbedienungssender, hier also das Mobiltelefon 3, kann je nach dessen Anzeigekapazität ignoriert oder beispielsweise als entsprechend verstellter Schiebeschalter auf dessen Display 32 dargestellt werden.

Ergänzend zu vorbeschriebenen Ausführungsbeispielen kann es weiter vorgesehen sein, dass die zur Bedienung des Fahrerinformationssystems 1 auf den mobilen Rechner 2 oder 3 geladene Betriebssoftware durch aus einer weiteren Quelle erhältliche Programmdaten aktualisiert oder ergänzt wird. Vorstellbar ist hier, etwas im Falle des Mobiltelefons 3 als Fernbedienungssender, zusätzliche Programmdaten über eine Mobilfunkverbindung von einem Datenserver zu laden und so den Funktionsumfang des Fernbedienungssenders oder des Fernbedienungssenders und des Fahrerinformationssystems auszubauen oder anzupassen.

Für den Fall, dass auf dem Zusatzgerät 2, 3 (PDA, Handy, o.a.) eine Navigationssoftware implementiert ist, können auf Anforderung des PDAs oder des Handies für die Navigation erforderliche Daten, z.B. über Rundfunk verbreitete TMC-Daten (FM, DAB, terrestrisch oder satellitengestützt, o.a.) zur Berechnung einer optimalen Route unter Berücksichtigung der Verkehrslage, aus dem Autoradio auf das PDA oder das Handy übertragen werden. Mithin kann es auch vorgesehen sein, originär im Fahrerinformationssystem 1 angeordnete Funktionen im als Fernbedienungssender fungierenden mobilen Rechner 2 oder 3 auszuführen und in diese auszulagern.

## Patentansprüche

1. Verfahren zur Verwendung eines mobilen Rechners (2, 3) insbesondere Klein-Computer (2) oder Mobiltelefon (3), zur Bedienung eines in einem Fahrzeug installierten Fahrerinformationssystems (1),
wobei in einem Anlernmodus
a) eine Bedienoberfläche des Fahrerinformationssystems (1) beschreibende Informationen über eine Kommunikationsverbindung (16, 26, 36) vom Fahrerinformationssystem (1) an den mobilen Rechner übertragen werden, und
b) der mobile Rechner (2, 3) aufgrund der erhaltenen Informationen eine Bedienoberfläche des Fahrerinformationssystems (1) nachbildet,
und wobei in einem Bedienmodus der mobile Rechner (2, 3) Benutzereingaben an der nachgebildeten Bedienoberfläche in Bediensignale umsetzt und diese über die Kommunikationsverbindung (16, 26, 36) an das Fahrerinformationssystem (1) sendet.

## Claims

1. Method for using a mobile computer (2, 3), particularly a small computer (2) or a mobile telephone (3), for operator control of a driver information system (1) installed in a vehicle,
where, in a training mode,
a) information describing a user interface in the driver information system (1) is transmitted to the mobile computer by the driver information system (1) via a communication link (16, 26, 36), and
b) the mobile computer (2, 3) takes the received information as a basis for simulating a user interface in the driver information system (1),
and where, in an operator control mode, the mobile computer (2, 3) converts user inputs on the simulated user interface into operator control signals and sends these to the driver information system (1) via the communication link (16, 26, 36).

## Revendications

1. Procédé d'utilisation d'un ordinateur portable (2, 3), en particulier un petit ordinateur (2) ou un téléphone mobile (3), pour commander un système d'information du conducteur (1) installé dans un véhicule,
**caractérisé en ce que**
dans un mode d'apprentissage,
a) des informations décrivant une surface de commande du système d'information du conducteur (1) sont transmises du système d'information du conducteur (1) vers l'ordinateur portable par une liaison de communication (16, 26, 36), et
b) l'ordinateur portable (2, 3) reproduit une surface de commande du système d'information du conducteur (1) suite aux informations obtenues,
et dans un mode de commande, l'ordinateur portable (2, 3) convertit en signaux de commande des entrées de l'utilisateur sur la surface de commande reproduite, et envoie ceux-ci au système d'information du conducteur (1) par la liaison de communication (16, 26, 36).
